# EUROPÄISCHE PATENTSCHRIFT

(11) **EP 1 772 721 B1**
(45) Veröffentlichungstag und Bekanntmachung des Hinweises auf die Patenterteilung: **03.04.2013**
(21) Anmeldenummer: 06020695.0
(22) Anmeldetag: 02.10.2006
(51) Int. Cl.: G01N 3/02, G01N 27/20, G01N 3/04, G01N 3/12, F16L 15/00

(54) **Hohler Prüfkörper**
Hollow test body
Eprouvette creuse

(30) Priorität: 07.10.2005 DE 102005048009
(43) Veröffentlichungstag der Anmeldung: 11.04.2007
(73) Patentinhaber: WILO SE, 44263 Dortmund (DE)
(72) Erfinder: Küster, Bernd, 44263 Dortmund (DE)
(74) Vertreter: Cohausz Hannig Borkowski Wißgott

(56) Entgegenhaltungen:
- AT-B- 378 853
- DE-A1- 2 118 159
- DE-A1- 3 243 201
- GB-A- 818 250
- GB-A- 842 001
- US-A- 5 528 942

## Beschreibung

Die Erfindung betrifft einen hohlen Prüfkörper zur Materialprüfung mit mindestens einem Einlass zum Prüfkörperhohlraum.

Aus der AT 378 853 ist ein hohlzylindrischer Prüfkörper für Rissausbreitungsmessungen im Ultraschallverfahren bekannt. Ein solcher Prüfkörper eignet sich nicht für Berst- und Zugversuche.

Aus der DE 3243021 A1 und US 5528942 A sind rohrförmige Prüfkörper mit Gewinden zum Befestigen an einem Prüfgerät bekannt.

Aufgabe der Erfindung ist es, einen Prüfkörper der eingangs genannten Art so zu verbessern, dass bei hoher Anwendungsvielfalt eine sichere und einfache Befestigung ermöglicht wird.

Diese Aufgabe wird durch einen Prüfkörper gemäß Anspruch 1 gelöst, dass insbesondere für Berst- und/oder Zugversuche von Kunststoff der Einlassbereich stutzenförmig ist und ein Außen- oder Innengewinde zum Befestigen an einem Prüfgerät aufweist und dass im Bereich des/der Gewindestutzen das Rohr eine größere Wandstärke aufweist als im mittleren Prüfbereich.

Die erfinderische Lehre ist, spritzgegossene, rohrförmige Probekörpergeometrien mit angeformtem Gewinde, die der Materialcharakterisierung durch Einwirkung von strömenden Fördermedien dienen und gleichzeitig als Zugprobe und Berstprobe dienen zu können, sowie eine direkte und einfache Korrelation zwischen Berstdruckwert und mechanischen Festigkeiten insbesondere für unterschiedliche Wanddicken und Anspritzsituationen/Bindenahtausbildungen zulassen, Mit dem vorliegenden Verfahren können alle Arten der Materialalterung auf dieselbe Geometrie angewandt und Materialparameterfür unterschiedlichste Werkstoffe verglichen werden. Somit können Auslegungsgrenzen für Kunststoffbauteile realistischer ermittelt werden. Sie liefern dem Konstrukteur eine verlässlichere Datenbasis.

Aufgrund des oder der Gewinde ist eine besonders einfache und sichere Befestigung im Prüfgerät gegeben. Der Prüfkörper ist über Rohrgewinde leicht in bestehende Förderkreisläufe integrierbar. Dies ist wichtig für den Abgleich von Labor- und Felddaten, Auch ist eine Vereinfachung von Feldversuchen gegeben,

Materialdaten können geometrieunabhängig, das heißt untereinander vergleichbar und unabhängig von existierenden Datenbanken oder Rohstoffiherstellerangaben ermittelt werden. Formteilzustände "quasi-Bindenahtfrei", "radiale Bindenaht", "axiale Bindenaht" können für unterschiedlichste Kunststoffe in ein und demselben Spritzgusswerkzeug erzeugt werden. Ein realistischer Betriebszustand ist einstellbar, zum Beispiel eine einseitige Medienbelastung im Vergleich zu bisherigen Norm-Probekörpem. Es ist eine Korrelation zwischen Berstdruckwerten und mechanischen Kennwerten herstellbar. Verschiedenste thermoplastische Kunststoffe, Beschichtungen von thermoplastischen Kunststoffen, 2-Komponenten-Lösungen, können in derselben Geometrie hergestellt und verglichen werden. Dabei ist insbesondere das strömende Medium an der inneren Probekörpennrand Einfluss- und Alterungsfaktor. Es wird eine leichte Umrechnung des ermittelten Berstdrucks für verschiedene Alterungszustände in axiale und radiale mechanische Spannung und damit Ermittlung von Auslegungsgrenzen für Kunststoffbauteile ermöglicht. Verschiedene Bauweisen (Layergestaltung) und Imprägnierungen von FDM-Werkstoffen können auf Haltbarkeit und Belastbarkeit untersucht werden.

Gemäß der Erfindung ist der Prüfkörper rohrförmig. Hierbei kann ein Rohrende verschlossen sein und am anderen Rohrende ein Gewindestutzen angeordnet sein. Alternativ kann aber auch an beiden Rohrenden ein Gewindestutzen angeordnet sein.

Auch ist von Vorteil, wenn der Innendurchmesser über die gesamte Länge des Prüfkörpers gleich bleibend ist.

Ein besonders vorteilhaftes Verfahren zum Herstellen eines Prüfkörpers nach einem der Ansprüche ist dann gegeben, wenn in einem Spritzgusswerkzeug an einem oder beiden Enden der Spritzform der Kunststoff angespritzt wird. Hierbei kann in einem Spritzgusswerkzeug mittig zwischen beiden Enden der Spritzform der Kunststoff eingespritzt werden. Eine gute Verteilung des Kunststoffs wird erreicht, wenn an dem/den Einspritzende(n) ein ringförmiger Angusskanal zur Verteilung des Kunststoffs angeordnet ist.

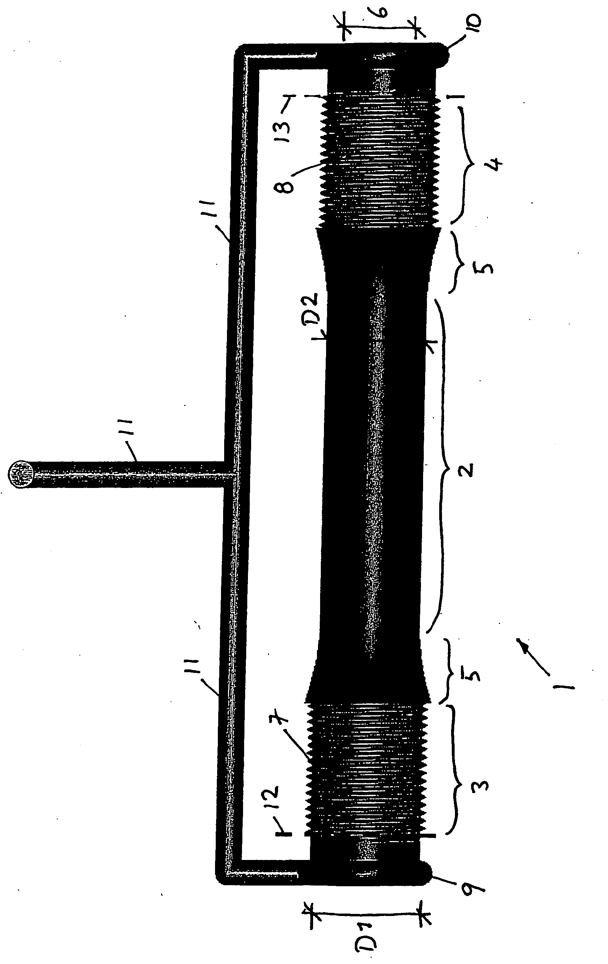

Ein Ausführungsbeispiel des Prüfkörpers ist in der Zeichnung in einer Seitenansicht mit noch befestigten Gusskanälen dargestellt und wird im Folgenden näher beschrieben.

Der hohle Prüfkörper 1 aus Kunststoff wird vorzugsweise für Berstversuche und Zugversuche am Kunststoff verwendet. Er ist aber auch für weitere Materialprüfungen einsetzbar wie das Prüfen des Alterungs- oder akustischem Verhalten von Kunststoffen und zum Ermitteln des Abbauverhaltens und der Einsatzgrenzen von Kunststoffbauteilen unter Medien (Sauerstoff, Chlor, Heizungswasseradditiven ...) und Druck- und Temperatureinwirkungen.

Der rohrförmige Prüfkörper weist einen mittleren Prüfbereich 2 auf, der einen gleich bleibenden Innen- und Außendurchmesser und damit eine gleich bleibende Wandstärke besitzt. An beiden Enden des Prüfkörpers 1 sind Anschlussstutzen 3, 4 aus dem gleichen Kunststoffrnaterial angeformt, die einen größeren Außendurchmesser D1 und/oder eine größere Wandstärke besitzen als der mittlere Bereich 2 mit seinem Außendurchmesser D2. Zwischen dem mittleren Bereich 2 und den zwei Anschlussstutzen 3, 4 befinden sich Übergangsbereiche 5, die kontinuierlich ansteigende Durchmesser und/oder Wanddicken vom mittleren Bereich zu den Anschlussstutzen erzeugen.

Vorzugsweise besitzt der zylindrische Innenraum des Prüfkörpers über seine gesamte Länge einen gleich bleibenden Innendurchmesser 6.

Beide Anschlussstutzen 3, 4 weisen jeweils ein Außengewinde 7, 8 auf, mit denen der Prüfkörper zu beiden Sorten endet. Der Außendurchmesser der beiden Außengewinde 7, 8 ist damit größer als der Außendurchmesser D2 des mittleren Bereichs 2.

Der Prüfkörper wird im Spritzgussverfahren hergestellt, wobei dann an beiden äußeren Enden der Anschlussstutzen 3, 4 ein Eingusskanal 9, 10 angeformt ist, in die Gusskanäle 11 münden. Nachdem das gespritzte Teil aus dem Spritzgusswerkzeug gelangt ist, werden an den Trennstellen 12, 13 die Eingusskanäle 9, 10 von den Anschlussstutzen 3, 4 abgetrennt.

Zum Herstellen des Prüfkörpers in einem Spritzgusswerkzeug wird somit der Kunststoff vorzugsweise an beiden Enden der Spritzform eingespritzt. Alternativ kann dies aber auch nur an einem Ende oder im mittleren Bereich der Spritzform erfolgen. Eine weitere Möglichkeit der Herstellung liegt im generativen Rapid-Prototyping-Verfahren, zum Beispiel Fused Deposition Modeling (FDM) oder andere. Hierdurch wird zusätzlich ein Vergleich verschiedener Rapid-Prototyping-Werkstoffe und verschiedener RP-Verfahren bezüglich der mechanischen Eigenschaften ermöglicht.

In einer nicht dargestellten Ausführungsform ist das Rohrende des Prüfkörpers an einem Ende verschlossen, so dass nur über das andere offene Ende der Prüfkörper befestigt, das heißt angeschraubt und unter Druck gesetzt wird.

## Patentansprüche

1. Hohler, rohrförmiger Prüfkörper (1) aus einem Kunststoffmaterial zur Materialprüfung in einem Berst- und/oder Zugversuch des Prüfkörpers (1), mit mindestens einem Einlass zum Prüfkörperhohlraum, wobei der Einlassbereich stutzenförmig (3, 4) ist und ein Außen- oder Innengewinde (7, 8) zum Befestigen an einem Prüfgerät aufweist, **dadurch gekennzeichnet, dass** der/ die Gewindestutzen (3, 4) eine größere Wandstärke aufweist aufweisen als der Prüfkörper (1) im mittleren Prüfbereich (2) aufweist.

2. Prüfkörper (1) nach Anspruch 1, **dadurch gekennzeichnet, dass** der/ die Gewindestutzen (3, 4) des Prüfkörpers (1) einen größeren Außendurchmesser (D1) aufweisen als der Prüfkörper (1) im mittleren Prüfbereich (2) aufweist.

3. Prüfkörper (1) nach Anspruch 1 oder 2, **dadurch gekennzeichnet, dass** ein Rohrende verschlossen ist und am anderen Rohrende ein Gewindestutzen angeordnet ist.

4. Prüfkörper (1) nach Anspruch 1 oder 2, **dadurch gekennzeichnet, dass** an beiden Rohrenden ein Gewindestutzen (3, 4) angeordnet ist.

5. Prüfkörper (1) nach einem der vorherigen Ansprüche, **dadurch gekennzeichnet, dass** der Innendurchmesser über die gesamte Länge des Prüfkörpers (1) gleich bleibend ist.

6. Prüfkörper (1) nach einem der vorherigen Ansprüche, **dadurch gekennzeichnet, dass** er in einem Spritzgusswerkzeug durch Einspritzen des Kunststoffs an einem oder beiden Enden der Spritzform hergestellt ist.

7. Prüfkörper (1) nach einem der vorherigen Ansprüche, **dadurch gekennzeichnet, dass** er in einem Spritzgusswerkzeug durch Einspritzen des Kunststoffs mittig zwischen beiden Enden der Spritzform hergestellt ist.

8. Prüfkörper (1) nach Anspruch 6, **dadurch gekennzeichnet, dass** er mittels eines ringförmigen Angusskanals (9, 10) an dem/den Einspritzende(n) zur Verteilung des Kunststoffs hergestellt ist.

9. Prüfkörpers (1) nach Anspruch 4, **dadurch gekennzeichnet, dass** zwischen dem mittleren Prüfbereich (2) und den zwei Gewindestutzen (3, 4) Übergangsbereiche (5) vorhanden sind, die kontinuierlich ansteigende Wanddicken vom mittleren Prüfbereich (2) zu den Gewindestutzen aufweisen.

10. Prüfkörper (1) nach Anspruch 4 oder 9, **dadurch gekennzeichnet, dass** zwischen dem mittleren Prüfbereich (2) und den zwei Gewindestutzen (3, 4) Übergangsbereiche (5) vorhanden sind, die kontinuierlich ansteigende Durchmesser vom mittleren Prüfbereich (2) zu den Gewindestutzen aufweisen.

## Claims

1. Hollow, tubular test body (1) of a plastics material for materials testing of the test body (1) in a bursting test and/or tensile test, with at least one inlet to the test body cavity, wherein the inlet region is in the form of a connecting piece (3, 4) and has an external or internal thread (7, 8) for fastening to a testing device, **characterized in that** the threaded connecting piece(s) (3, 4) has/have a greater wall thickness than the test body (1) in the middle testing region (2).

2. Test body (1) according to Claim 1, **characterized in that** the threaded connecting piece(s) (3, 4) of the test body (1) has/have a greater outside diameter (D1) than the test body (1) in the middle testing region (2).

3. Test body (1) according to Claim 1 or 2, **characterized in that** one end of the tube is closed and a threaded connecting piece is arranged at the other end of the tube.

4. Test body (1) according to Claim 1 or 2, **characterized in that** a threaded connecting piece (3, 4) is arranged at both ends of the tube.

5. Test body (1) according to one of the preceding claims, **characterized in that** the inside diameter is constant over the entire length of the test body (1).

6. Test body (1) according to one of the preceding claims, **characterized in that** it is produced in an injection-moulding tool by injecting the plastic at one or both ends of the injection mould.

7. Test body (1) according to one of the preceding claims, **characterized in that** it is produced in an injection-moulding tool by injecting the plastic midway between the two ends of the injection mould.

8. Test body (1) according to Claim 6, **characterized in that** it is produced by means of an annular runner (9, 10) at the injection end(s) for distributing the plastic.

9. Test body (1) according to Claim 4, **characterized in that** between the middle testing region (2) and the two threaded connecting pieces (3, 4) there are transitional regions (5), which have continuously increasing wall thicknesses from the middle testing region (2) to the threaded connecting pieces.

10. Test body (1) according to Claim 4 or 9, **characterized in that** between the middle testing region (2) and the two threaded connecting pieces (3, 4) there are transitional regions (5), which have continuously increasing diameters from the middle testing region (2) to the threaded connecting pieces.

## Revendications

1. Eprouvette creuse tubulaire (1) composée d'une matière plastique pour l'essai de matériaux dans un essai d'éclatement et/ou de traction de l'éprouvette (1) avec au moins une entrée vers l'espace creux de l'éprouvette, la région d'entrée étant réalisée en forme de tubulure (3, 4) et présentant un filet extérieur ou intérieur (7, 8) pour la fixation dans un appareil d'essais, **caractérisée en ce que** la/les tubulure(s) filetée(s) (3, 4) présente(nt) une plus forte épaisseur de paroi que l'éprouvette (1) dans la région d'essai centrale (2).

2. Eprouvette (1) selon la revendication 1, **caractérisée en ce que** la/les tubulure(s) filetée(s) (3, 4) de l'éprouvette (1) présente(nt) un plus grand diamètre extérieur (D1) que l'éprouvette (1) dans la région d'essai centrale (2).

3. Eprouvette (1) selon la revendication 1 ou 2, **caractérisée en ce qu'**une extrémité du tube est fermée et une tubulure filetée est disposée à l'autre extrémité du tube.

4. Eprouvette (1) selon la revendication 1 ou 2, **caractérisée en ce qu'**une tubulure filetée (3, 4) est disposée aux deux extrémités du tube.

5. Eprouvette (1) selon l'une quelconque des revendications précédentes, **caractérisée en ce que** le diamètre intérieur est constant sur toute la longueur de l'éprouvette (1).

6. Eprouvette (1) selon l'une quelconque des revendications précédentes, **caractérisée en ce qu'**elle est fabriquée dans un outil de moulage par injection en injectant la matière plastique à une ou aux deux extrémités du moule d'injection.

7. Eprouvette (1) selon l'une quelconque des revendications précédentes, **caractérisée en ce qu'**elle est fabriquée dans un outil de moulage par injection en injectant la matière plastique au milieu entre les deux extrémités du moule d'injection.

8. Eprouvette (1) selon la revendication 6, **caractérisée en ce qu'**elle est fabriquée par un canal de coulée annulaire (9, 10) disposé à la/aux extrémité(s) d'injection pour la répartition de la matière plastique.

9. Eprouvette (1) selon la revendication 4, **caractérisée en ce que** des régions de transition (5) sont prévues entre la région d'essai centrale (2) et les deux tubulures filetées (3, 4), lesquelles régions de transition présentent des épaisseurs de paroi augmentant en continu depuis la région d'essai centrale (2) jusqu'aux tubulures filetées.

10. Eprouvette (1) selon la revendication 4 ou 9, **caractérisée en ce que** des régions de transition (5) sont prévues entre la région d'essai centrale (2) et les deux tubulures filetées (3, 4), lesquelles régions de transition présentent des diamètres augmentant en continu depuis la région d'essai centrale (2) jusqu'aux tubulures filetées.
